# EUROPEAN PATENT SPECIFICATION

(11) **EP 2 822 119 B1**
(45) Date of publication and mention of the grant of the patent: **13.01.2016**
(21) Application number: 13175203.2
(22) Date of filing: 05.07.2013
(51) Int. Cl.: H02G 3/08, H02G 3/18

(54) **Mounting box**
Montagekasten
Boîtier de montage

(43) Date of publication of application: 07.01.2015
(73) Proprietor: ABB Oy, 00380 Helsinki (FI)
(72) Inventor: Andersson, Johan, 06100 Porvoo (FI); Didriksson, Lars, 06100 Porvoo (FI); Tervo, Pekka, 06100 Porvoo (FI)
(74) Representative: Kolster Oy Ab

(56) References cited:
- EP-A1- 2 375 523
- EP-A1- 2 525 127

## Description

### FIELD OF THE INVENTION

The present invention relates to a mounting box according to preamble of independent claim 1.

It is known in the art to attach an outer surface of an electric cable or an installation conduit to a box case of a mounting box with attachment means. Such a mounting box is known from EP 2375523. Known attachment means require considerably space and/or are complicated structures with multiple parts.

### BRIEF DESCRIPTION OF THE INVENTION

An object of the present invention is to provide a mounting box with simple and compact attachment means for attaching an elongated electric installation member to a box case of the mounting box.

The objects of the invention are achieved by a mounting box which is characterized by what is stated in the independent claim. The preferred embodiments of the invention are disclosed in the dependent claims.

The invention is based on the idea of integrating the attachment means into the box case of the mounting box. The integrated attachment means is adapted to allow movement of an elongated electric installation member through an installation aperture towards a mounting space and to resist reverse movement of the elongated electric installation member.

An advantage of the mounting box of the invention is that it has fewer parts than known corresponding mounting boxes.

### BRIEF DESCRIPTION OF THE DRAWINGS

In the following the invention will be described in greater detail by means of preferred embodiments with reference to the attached drawings, in which
Figure 1 shows a mounting box according to an embodiment of the invention;
Figures 2A and 2B show an installation aperture of the mounting box of Figure 1 with and without a removable shield plug;
Figures 3A - 3C show a sectional view of an attachment member during insertion of an installation conduit as seen from lateral direction;

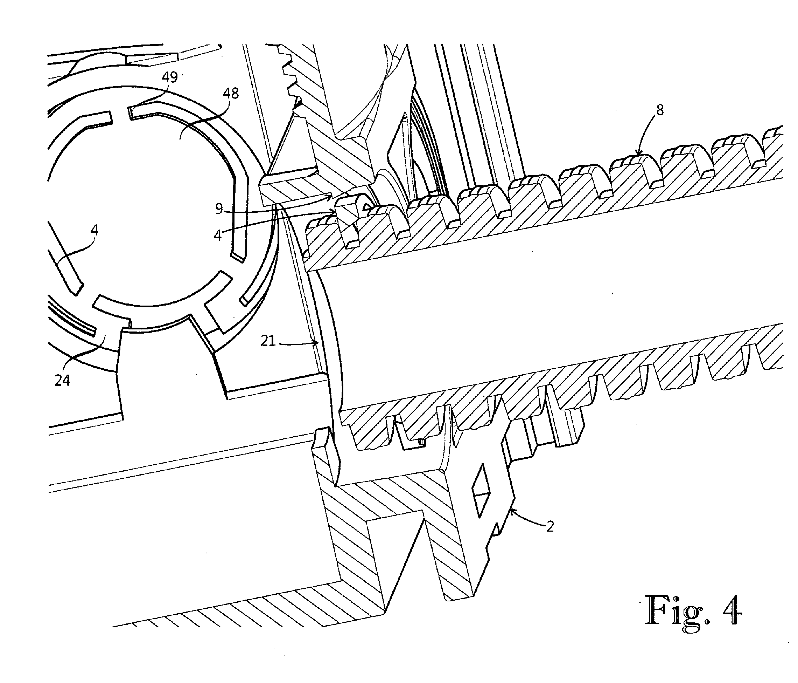

Figure 4 shows a sectional view of a detail of the mounting box of Figure 1 with an installation conduit attached thereto;
Figure 5 shows a mounting box according to another embodiment of the invention;
Figure 6 shows a sectional view of the mounting box of Figure 5 as seen from lateral direction; and
Figure 7 shows an enlarged detail of Figure 6.

### DETAILED DESCRIPTION OF THE INVENTION

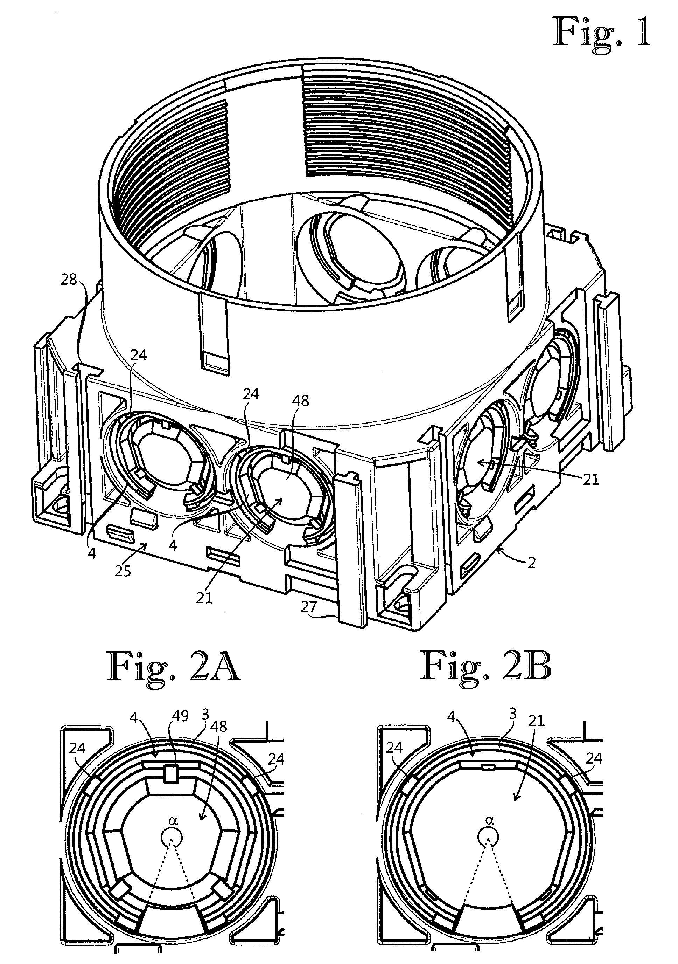

Figure 1 shows a mounting box comprising a box case 2 with integrated attachment means. The box case 2 defines a mounting space inside thereof, the mounting space being adapted for accommodating an electrical component, such as a wall socket or a light switch. The box case 2 comprises two installation apertures 21 on each of its four sides. Each installation aperture 21 is adapted to provide a passage between exterior of the box case 2 and the mounting space.

The attachment means comprises an attachment member 4 for each installation aperture 21 and four radial supporting members 24 for each attachment member 4. The attachment member 4 is supported to the box case 2 through corresponding radial supporting members 24.

In Figure 1 each installation aperture 21 is blocked by a removable shield plug 48 located radially inside corresponding attachment member 4. Each removable shield plug 48 is an integral part of the box case 2. The removable shield plug 48 is adapted to be cut off in order to enable introducing of an elongated electric installation member into the installation aperture 21. Cutting off the removable shield plug 48 is easy since the removable shield plug 48 is only supported to corresponding attachment member 4 through three narrow supporting members 49. Idea is that an electrician removes required number of removable shield plugs 48 while the rest removable shield plugs protect the mounting space against dirt and foreign bodies.

Figure 2A shows an enlargement of the installation aperture 21 with the removable shield plug 48. Figure 2B shows an enlargement of the installation aperture 21 without the removable shield plug.

Each attachment member 4 has a form of a ring segment. Each attachment member 4 surrounds corresponding installation aperture 21 in an engagement angle α. In the mounting box shown in Figure 1 the engagement angle α is roughly 320°. In an alternative embodiment the engagement angle may be 180° or higher. In the embodiment of Figure 1 the attachment member 4 is a one-piece ring segment. It is also possible to divide an attachment member having a form of a ring segment into several partial ring segments.

Figures 2A and 2B show that a combined peripheral length of the radial supporting members 24 is less than fifth of a peripheral length of the attachment member 4. Peripheral slits 3 between the attachment member 4 and the box case 2 facilitate stretching of the attachment member 4 radially out-wards.

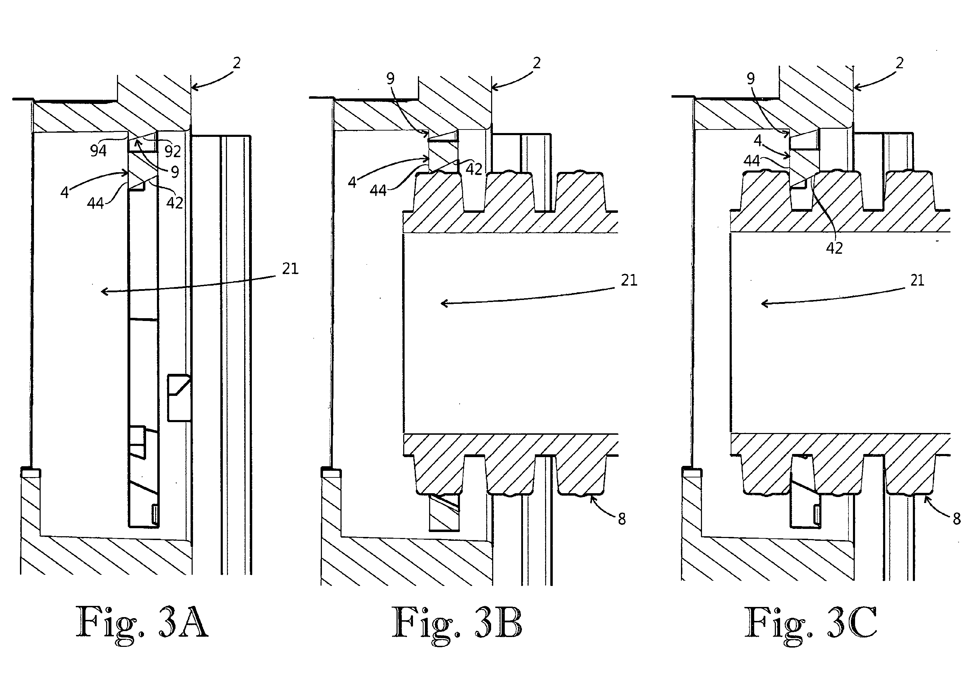

Figures 3A - 3C show a sectional view of the attachment member 4 during insertion of an elongated electric installation member 8 into the installation aperture corresponding to the attachment member 4. The elongated electric installation member 8 is an installation conduit having peripheral grooves on its outer surface. At a peripheral groove the installation conduit has a smaller outer diameter than next to the peripheral groove.

The attachment member 4 has an access surface 42 and a stopping surface 44. The access surface 42 faces exterior of the box case 2 and has a form of a funnel segment. In other words the access surface 42 is a bevelled surface whose radial inner diameter decreases in a direction from the exterior of the box case 2 towards the mounting space. The access surface 42 is adapted to co-operate with an outer surface of an elongated electric installation member when the elongated electric installation member is introduced into the installation aperture, the co-operation being adapted to move the attachment member 4 in radial direction from a resting position of the attachment member 4 such that cross-sectional area of the installation aperture increases.

The stopping surface 44 is a substantially planar surface facing the mounting space and extending substantially on a plane perpendicular to an axial direction of the installation aperture. The axial direction of the installation aperture is the direction in which an elongated electric installation member is pushed into the installation aperture. The stopping surface 44 is adapted to co-operate with an outer surface of an elongated electric installation member passing through the installation aperture when an outwards directed force is exerted to the elongated electric installation member, the co-operation being adapted to resist movement of the elongated electric installation member outwards through the installation aperture.

There is always some friction between an attachment member and an elongated electric installation member moving through the attachment member. Herein it is defined that an attachment member resists outwards movement of an elongated electric installation member when the resisting force is at least 200 % greater than a resisting force during inwards movement of the elongated electric installation member.

In Figure 3A the attachment member 4 is in its resting position. Figure 3B shows a situation in which an installation conduit is being introduced into the installation aperture. In Figure 3B the attachment member 4 is located radially further form a centre line of the installation aperture than in Figure 3A such that cross-sectional area of the installation aperture has increased. In Figure 3B the attachment member 4 is in contact with an outer surface of the installation conduit at a point where an outer diameter of the installation conduit is at its maximum. Between situations of Figures 3A and 3B the bevelled access surface 42 has co-operated with an outer surface of the installation conduit wherein the attachment member 4 has bent in order to increase the cross-sectional area of the installation aperture.

In Figure 3C the installation conduit has been pushed deeper into the installation aperture. The attachment member 4 has substantially returned to its resting position due to its elasticity and has partially entered a peripheral groove on an outer surface of the installation conduit. If one now tries to pull the installation conduit out of the box case 2 the stopping surface 44 co-operates with the outer surface of the installation conduit. To be more specific, the stopping surface 44 co-operates with a ring shaped projection on the outer surface of the installation conduit. These ring shaped projections alternate with the peripheral grooves. An outer diameter of a ring shaped projection is greater than an outer diameter of an adjacent peripheral groove.

Figures 3A - 3C show that the attachment means further comprises a second attachment member 9 for the installation aperture 21. The second attachment member 9 is formed on a surface of the box case 2 surrounding the installation aperture 21. Radial distance of the second attachment member 9 from the centre line of the installation aperture 21 is greater than radial distance of the attachment member 4 from the centre line of the installation aperture 21. The second attachment member 9 is adapted to engage an outer surface of an elongated electric installation member which has a greater diameter than the elongated electric installation member whose outer surface the attachment member 4 is adapted to engage. Axial position of the second attachment member 9 is substantially the same as axial position of the attachment member 4.

The second attachment member 9 has a form of a ring segment. The second attachment member 9 surrounds corresponding installation aperture 21 in a second engagement angle. In the mounting box shown in Figure 1 the second engagement angle is roughly 90°. The second engagement angle is smaller than the engagement angle α because the second attachment member 9 cannot move radially outwards during insertion of an elongated electric installation member. It is possible to divide the second attachment member into several partial ring segments.

The second attachment member 9 has a similar basic form as the attachment member 4. The second attachment member 9 has an access surface 92 and a stopping surface 94. The access surface 92 faces exterior of the box case 2 and has a form of a funnel segment. The access surface 92 is adapted to co-operate with an outer surface of an elongated electric installation member when the elongated electric installation member is introduced into the installation aperture. Since the second attachment member 9 cannot move in the radial direction the co-operation between the access surface 92 and the outer surface of the elongated electric installation member is based on elasticity thereof.

The stopping surface 94 is a substantially planar surface facing the mounting space and extending substantially on a plane perpendicular to the axial direction of the installation aperture. The operating principle of the stopping surface 94 is identical to the operating principle of the stopping surface 44 described above.

The second attachment member 9 is adapted to be enabled by removing corresponding attachment member 4. The attachment member 4 may be removed by cutting the corresponding radial supporting members 24.

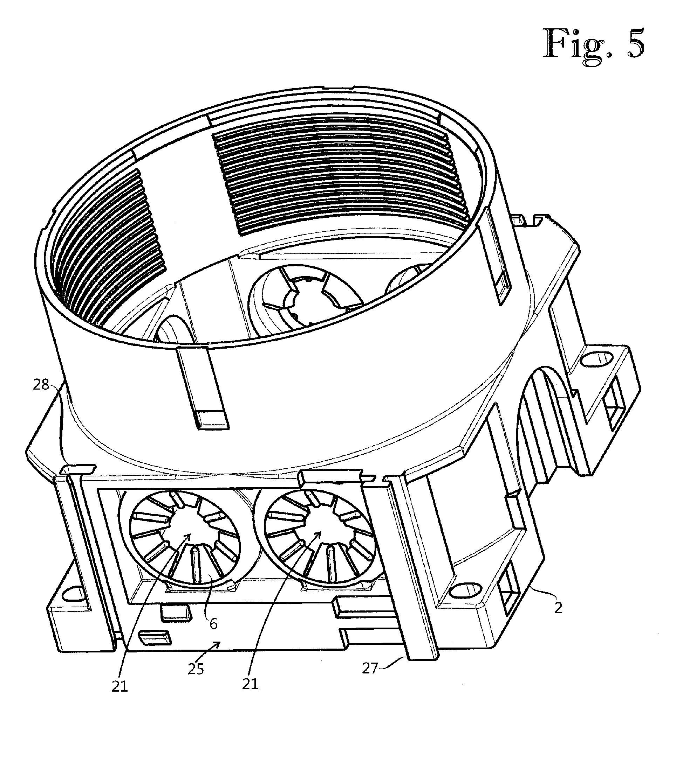

Figure 5 shows a mounting box whose attachment means is adapted to engage an outer surface of an electric cable. The attachment means comprise six attachment members 6 for each installation aperture 21.

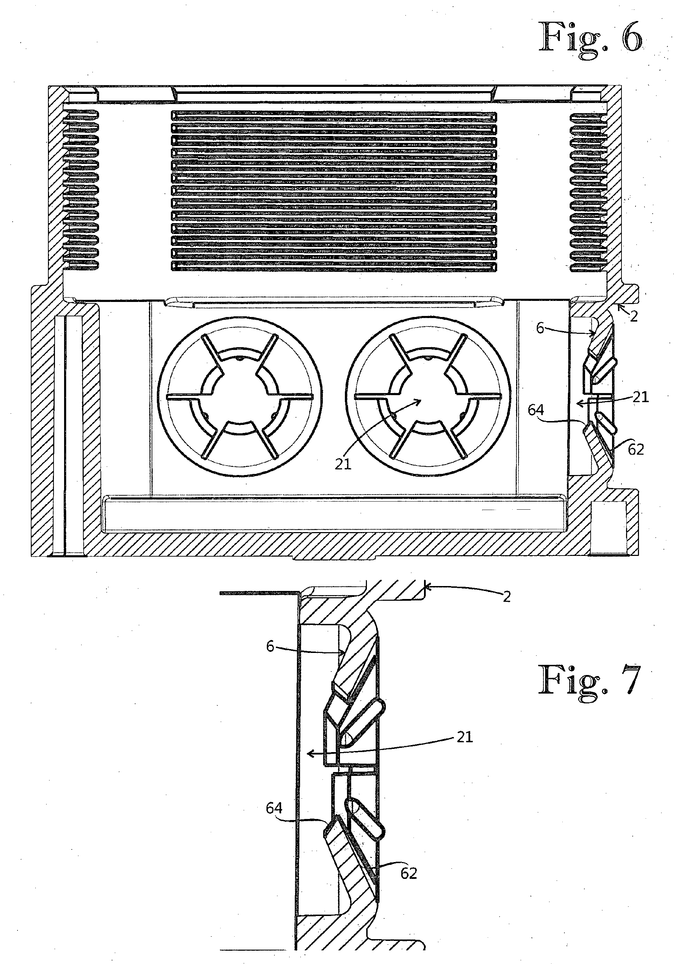

Figure 6 shows a sectional view of the mounting box of Figure 5 as seen from lateral direction, and Figure 7 shows an enlarged detail of Figure 6. Each attachment member 6 extends radially inwards from a surface of the box case 2 surrounding the corresponding installation aperture 21 and obliquely inwards in axial direction. An access surface 62 of the attachment member 6 is an outer surface of the attachment member 6 facing exterior of the box case 2. The access surface 62 is a slightly curved surface or a concave surface. A stopping surface 64 of the attachment member 6 comprises a distal end surface of the attachment member 6. If one tries to pull an electric cable out of the box case 2 the outer surface of the electric cable co-operates with the stopping surface 64 and bends the attachment member 6 outwards in axial direction which reduces cross-sectional area of the installation aperture.

The attachment means of the mounting box of Figure 5 comprises three long attachment members and three short attachment members for each installation aperture 21. Every second attachment member is longer than adjacent attachment member.

In an embodiment all parts of a mounting box are made of same material such as flexible plastic material. It is possible to manufacture the entire mounting box with a single injection moulding process.

In the embodiments shown in Figures 1 and 5 the box case 2 has a base portion whose cross section is substantially a square. The attachment means are located within the square. Therefore the mounting boxes have a form which allows placing them closely side by side. Each box case 2 comprises connection means for connecting the box case 2 to an adjacent box case. The connection means comprises projections 27 having a T-shaped cross section and slots 28 having a T-shaped cross section. Electric wires may pass from one box case to adjacent one through the installation apertures.

Side walls 25 of the base portion of the box case 2 are substantially planar. Each side wall 25 is provided with two installation apertures 21. Axial direction of each installation aperture 21 extends perpendicular to corresponding side wall 25. The attachment means are located within the side walls 25. None of the attachment members projects from corresponding side wall 25.

## Claims

1. A mounting box comprising:
a box case (2) defining a mounting space inside thereof, the box case (2) comprising at least one installation aperture (21) adapted to provide a passage between an exterior of the box case (2) and the mounting space; and
attachment means comprising at least one attachment member (4, 6) for each of the at least one installation aperture (21), each attachment member (4, 6) having an access surface (42, 62) and a stopping surface (44, 64), the access surface (42, 62) being an bevelled surface adapted to co-operate with an outer surface of an elongated electric installation member (8) when the elongated electric installation member (8) is introduced into the installation aperture (21), the co-operation being adapted to move the attachment member (4, 6) in radial direction from a resting position of the attachment member (4, 6) such that cross-sectional area of the installation aperture (21) increases, the stopping surface (44, 64) being adapted to co-operate with an outer surface of an elongated electric installation member (8) passing through the installation aperture (21) when an outwards directed force is exerted to the elongated electric installation member (8), the co-operation being adapted to resist movement of the elongated electric installation member (8) outwards through the installation aperture (21), **characterized in that** each attachment member (4, 6) is an integral part of the box case (2) such that the box case (2) and each attachment member (4, 6) are made from a same material.

2. A mounting box according to claim 1, **characterized in that** the attachment member (4) has a form of a ring segment, and the attachment means further comprises a plurality of radial supporting members (24) through which the attachment member (4) is supported to the box case (2).

3. A mounting box according to claim 2, **characterized in that** the access surface (42) is a surface of the attachment member (4) facing exterior of the box case (2) and having a form of a funnel segment.

4. A mounting box according to claim 2 or 3, **characterized in that** the stopping surface (44) is a substantially planar surface of the attachment member (4) facing the mounting space and extending substantially on a plane perpendicular to an axial direction of the installation aperture (21).

5. A mounting box according to any one of claims 2 to 4, **chara c t e r i z e d** in that the attachment member (4) surrounds the installation aperture (21) in an engagement angle (α) which is at least 180°.

6. A mounting box according to any one of claims 2 to 5, **c h a r-acterized** in that a combined peripheral length of the plurality of radial supporting members (24) is less than fifth of a peripheral length of the attachment member (4).

7. A mounting box according to any one of claims 2 to 6, **characterized in that** the at least one attachment member (4) is adapted to enter at least partially a peripheral groove on an outer surface of the elongated electric installation member (8).

8. A mounting box according to any one of claims 2 to 7, **characterized in that** the mounting box further comprises a removable shield plug (48) for each of the at least one installation aperture (21), each of the removable shield plugs (48) is an integral part of the box case (2), located radially inside corresponding attachment member (4) and adapted to be cut off in order to enable introducing of an elongated electric installation member (8) into the installation aperture (21).

9. A mounting box according to claim 1, **characterized in that** the attachment means comprises for each of the at least one installation aperture (21) a first attachment member (4) and a second attachment member (9) each having a form of a ring segment, the first attachment member (4) being adapted to engage an outer surface of an elongated electric installation member (8) having a first outer diameter, the second attachment member (9) being adapted to engage an outer surface of an elongated electric installation member having a second outer diameter, the second outer diameter being greater than the first outer diameter.

10. A mounting box according to claim 9, **characterized in that** the attachment means further comprises for each first attachment member (4) a plurality of radial supporting members (24) through which the first attachment member (4) is supported to the box case (2), each second attachment member (9) being formed on a surface of the box case (2) surrounding the corresponding installation aperture (21).

11. A mounting box according to claim 10, **characterized in that** each second attachment member (9) is adapted to be enabled by removing corresponding first attachment member (4).

12. A mounting box according to claim 1, **characterized in that** the attachment means comprises a plurality of attachment members (6) for each installation aperture (21), each attachment member (6) extending radially inwards from a surface of the box case (2) surrounding the corresponding installation aperture (21) and obliquely inwards in axial direction, wherein the access surface (62) is an outer surface of the attachment member (6) facing exterior of the box case (2), and the stopping surface (64) comprises a distal end surface of the attachment member (6).

13. A mounting box according to any preceding claim, **characterized in that** the box case (2) has a base portion whose cross section is substantially a square, the base portion comprising the at least one installation aperture (21), the attachment means being located within the square.

14. A mounting box according to any preceding claim, **characterized in that** the mounting box is made from a single material.

15. A mounting box according to any preceding claim, **characterized in that** the box case (2) is made from plastic material.

## Patentansprüche

1. Montagekasten, Folgendes umfassend:
ein Kastengehäuse (2), das einen Montageraum in dessen Inneren definiert, wobei das Kastengehäuse (2) wenigstens eine Installationsöffnung (21) umfasst, die angepasst ist, einen Durchlass zwischen einem Äußeren des Kastengehäuses (2) und dem Montageraum bereitzustellen; und
Befestigungsmittel, umfassend wenigstens ein Befestigungselement (4, 6) für jede der wenigstens einen Installationsöffnung (21), wobei jedes Befestigungselement (4, 6) eine Zugangsoberfläche (42, 62) und eine Anschlagoberfläche (44, 64) aufweist, und die Zugangsoberfläche (42, 62) eine angeschrägte Oberfläche ist, angepasst, um mit einer äußeren Oberfläche eines länglichen Elektroinstallationselements (8) in Wirkeingriff zu treten, wenn das längliche Elektroinstallationselement (8) in die Installationsöffnung (21) eingeführt wird, wobei der Wirkeingriff angepasst ist, das Befestigungselement (4, 6) in radialer Richtung so aus einer Ruheposition des Befestigungselements (4, 6) zu bewegen, dass sich eine Querschnittsfläche der Installationsöffnung (21) vergrößert, wobei die Anschlagoberfläche (44, 64) angepasst ist, mit einer äußeren Oberfläche eines länglichen Elektroinstallationselements (8) in Wirkeingriff zu treten, die durch die Installationsöffnung (21) ragt, wenn eine nach außen gerichtete Kraft auf das längliche Elektroinstallationselement (8) ausgeübt wird, wobei der Wirkeingriff angepasst ist, einer Bewegung des länglichen Elektroinstallationselements (8) nach außen durch die Installationsöffnung (21) zu widerstehen, **dadurch gekennzeichnet, dass** jedes Befestigungselement (4, 6) derart mit dem Kastengehäuse (2) einstückig ausgebildet ist, dass das Kastengehäuse (2) und jedes Befestigungselement (4, 6) aus einem gleichen Material ausgebildet sind.

2. Montagekasten nach Anspruch 1, **dadurch gekennzeichnet, dass** das Befestigungselement (4) eine Form eines Ringsegments hat und dass das Befestigungsmittel ferner mehrere radiale Stützelemente (24) aufweist, durch die das Befestigungselement (4) am Kastengehäuse (2) abgestützt ist.

3. Montagekasten nach Anspruch 2, **dadurch gekennzeichnet, dass** die Zugangsoberfläche (42) eine Oberfläche des Befestigungselements (4) ist, die zum Äußeren des Kastengehäuses (2) hin weist und eine Form eines Trichtersegments hat.

4. Montagekasten nach Anspruch 2 oder 3, **dadurch gekennzeichnet, dass** die Anschlagoberfläche (44) eine im Wesentlichen planare Oberfläche des Befestigungselements (4) ist, die zum Montageraum hin weist und sich im Wesentlichen in einer Ebene senkrecht zu einer Achsenrichtung der Installationsöffnung (21) erstreckt.

5. Montagekasten nach einem der Ansprüche 2 bis 4, **dadurch gekennzeichnet, dass** das Befestigungselement (4) die Installationsöffnung (21) in einem Eingriffswinkel (α) von wenigstens 180° umgibt.

6. Montagekasten nach einem der Ansprüche 2 bis 5, **dadurch gekennzeichnet, dass** eine kombinierte Umfangslänge der mehreren radialen Stützelemente (24) weniger als ein Fünftel einer Umfangslänge des Befestigungselements (4) beträgt.

7. Montagekasten nach einem der Ansprüche 2 bis 6, **dadurch gekennzeichnet, dass** das wenigstens eine Befestigungselement (4) angepasst ist, wenigstens zum Teil in eine umfängliche Nut an einer Außenoberfläche des länglichen Elektroinstallationselements (8) einzufahren.

8. Montagekasten nach einem der Ansprüche 2 bis 7, **dadurch gekennzeichnet, dass** der Montagekasten ferner einen entfernbaren Schutzpfropfen (48) für jede der wenigstens einen Installationsöffnung (21) aufweist, wobei jeder der entfernbaren Schutzpfropfen (48) mit dem Kastengehäuse (2) einstückig ausgebildet ist, angeordnet radial innerhalb des entsprechenden Befestigungselements (4) und angepasst, abgetrennt zu werden, um das Einführen eines länglichen Elektroinstallationselements (8) in die Installationsöffnung (21) zu ermöglichen.

9. Montagekasten nach Anspruch 1, **dadurch gekennzeichnet, dass** das Befestigungsmittel für jede der wenigstens einen Installationsöffnung (21) ein erstes Befestigungselement (4) und ein zweites Befestigungselement (9) umfasst, wobei jedes eine Form eines Ringsegments hat, wobei das erste Befestigungselement (4) angepasst ist, in eine Außenoberfläche eines länglichen Elektroinstallationselements (8) mit einem ersten Außendurchmesser einzugreifen, wobei das zweite Befestigungselement (9) angepasst ist, in eine Außenoberfläche eines länglichen Elektroinstallationselements mit einem zweiten Außendurchmesser einzugreifen, wobei der zweite Außendurchmesser größer ist als der erste Außendurchmesser.

10. Montagekasten nach Anspruch 9, **dadurch gekennzeichnet, dass** das Befestigungsmittel ferner für jedes erste Befestigungselement (4) mehrere radiale Stützelemente (24) umfasst, über die das erste Befestigungselement (4) am Kastengehäuse (2) abgestützt ist, wobei jedes zweite Befestigungselement (9) auf einer Oberfläche des Kastengehäuses (2) ausgebildet ist, die die entsprechende Installationsöffnung (21) umgibt.

11. Montagekasten nach Anspruch 10, **dadurch gekennzeichnet, dass** jedes zweite Befestigungselement (9) angepasst ist, durch Entfernen des entsprechenden ersten Befestigungselements (4) aktiviert zu werden.

12. Montagekasten nach Anspruch 1, **dadurch gekennzeichnet, dass** das Befestigungsmittel mehrere Befestigungselemente (6) für jede Installationsöffnung (21) umfasst, wobei sich jedes Befestigungselement (6) von einer Oberfläche des Kastengehäuses (2), die die entsprechende Installationsöffnung (21) umgibt, aus in einer axialen Richtung schräg nach innen erstreckt, wobei die Zugangsoberfläche (62) eine Außenoberfläche des Befestigungselements (6) ist, die zum Äußeren des Kastengehäuses (2) hin weist, und die Anschlagoberfläche (64) eine distale Endoberfläche des Befestigungselements (6) umfasst.

13. Montagekasten nach einem der vorhergehenden Ansprüche, **dadurch gekennzeichnet, dass** das Kastengehäuse (2) einen Basisabschnitt aufweist, dessen Querschnittsfläche im Wesentlichen quadratisch ist, wobei der Basisabschnitt die wenigstens eine Installationsöffnung (21) umfasst, wobei das Befestigungsmittel innerhalb des Quadrats angeordnet ist.

14. Montagekasten nach einem der vorhergehenden Ansprüche, **dadurch gekennzeichnet, dass** der Montagekasten aus einem einzigen Material gefertigt ist.

15. Montagekasten nach einem der vorhergehenden Ansprüche, **dadurch gekennzeichnet, dass** das Kastengehäuse (2) aus Kunststoffmaterial gefertigt ist.

## Revendications

1. Boîtier de montage comprenant :
- un corps de boîte (2) définissant un espace de montage à l'intérieur de ce dernier, le corps de boîte (2) comprenant au moins une ouverture d'installation (21) adaptée pour fournir un passage entre un extérieur du corps de boîte (2) et l'espace de montage ; et
- des moyens de fixation comprenant au moins un élément de fixation (4, 6) pour chacun parmi la au moins une ouverture d'installation (21), chaque élément de fixation (4, 6) ayant une surface d'accès (42, 62) et une surface de butée (44, 64), la surface d'accès (42, 62) étant une surface biseautée adaptée pour coopérer avec une surface externe d'un élément d'installation électrique allongé (8) lorsque l'élément d'installation électrique allongé (8) est introduit dans l'ouverture d'installation (21), la coopération étant adaptée pour déplacer l'élément de fixation (4, 6) dans la direction radiale à partir d'une position de repos de l'élément de fixation (4, 6) de sorte que la surface transversale de l'ouverture d'installation (21) augmente, la surface de butée (44, 64) étant adaptée pour coopérer avec une surface externe de l'élément d'installation électrique allongé (8) passant par l'ouverture d'installation (21) lorsqu'une force dirigée vers l'extérieur est exercée sur l'élément d'installation électrique allongé (8), la coopération étant adaptée pour résister au mouvement de l'élément d'installation électrique allongé (8) vers l'extérieur à travers l'ouverture d'installation (21), **caractérisé en ce que** chaque élément de fixation (4, 6) fait partie intégrante du corps de boîte (2) de sorte que le corps de boîte (2) et chaque élément de fixation (4, 6) sont réalisés à partir du même matériau.

2. Boîtier de montage selon la revendication 1, **caractérisé en ce que** l'élément de fixation (4) a une forme de segment annulaire, et les moyens de fixation comprennent en outre une pluralité d'éléments de support radiaux (24) par le biais desquels l'élément de fixation (4) est supporté sur le corps de boîte (2).

3. Boîtier de montage selon la revendication 2, **caractérisé en ce que** la surface d'accès (42) est une surface de l'élément de fixation (4) faisant face à l'extérieur du corps de boîte (2) et ayant une forme d'un segment d'entonnoir.

4. Boîtier de montage selon la revendication 2 ou 3, **caractérisé en ce que** la surface de butée (44) est une surface sensiblement plane de l'élément de fixation (4) faisant face à l'espace de montage et s'étendant sensiblement sur un plan perpendiculaire à une direction axiale de l'ouverture d'installation (21).

5. Boîtier de montage selon l'une quelconque des revendications 2 à 4, **caractérisé en ce que** l'élément de fixation (4) entoure l'ouverture d'installation (21) dans un angle de mise en prise (α) qui est d'au moins 180°.

6. Boîtier de montage selon l'une quelconque des revendications 2 à 5, **caractérisé en ce qu'**une longueur périphérique combinée de la pluralité d'éléments de support radiaux (24) est inférieure à un cinquième d'une longueur périphérique de l'élément de fixation (4).

7. Boîtier de montage selon l'une quelconque des revendications 2 à 6, **caractérisé en ce que** le au moins un élément de fixation (4) est adapté pour entrer au moins partiellement dans une rainure périphérique sur une surface externe de l'élément d'installation électrique allongé (8).

8. Boîtier de montage selon l'une quelconque des revendications 2 à 7, **caractérisé en ce que** le boîtier de montage comprend en outre un bouchon de blindage amovible (48) pour chacune de la au moins une ouverture d'installation (21), chacun des bouchons de blindage amovibles (48) fait partie intégrante du corps de boîte (2), positionnés radialement à l'intérieur de l'élément de fixation (4) correspondant et adaptés pour être coupés afin de permettre l'introduction d'un élément d'installation électrique allongé (8) dans l'ouverture d'installation (21).

9. Boîtier de montage selon la revendication 1, **caractérisé en ce que** les moyens de fixation comprennent pour chacune de la au moins une ouverture d'installation (21), un premier élément de fixation (4) et un second élément de fixation (9), chacun ayant une forme d'un segment annulaire, le premier élément de fixation (4) étant adapté pour mettre en prise une surface externe de l'élément d'installation électrique allongé (8) ayant un premier diamètre externe, le second élément de fixation (9) étant adapté pour mettre en prise une surface externe de l'élément d'installation électrique allongé ayant un second diamètre externe, le second diamètre externe étant supérieur au premier diamètre externe.

10. Boîtier de montage selon la revendication 9, **caractérisé en ce que** les moyens de fixation comprennent en outre pour chaque premier élément de fixation (4), une pluralité d'éléments de support radiaux (24) par le biais desquels le premier élément de fixation (4) est supporté sur le corps de boîte (2), chaque second élément de fixation (9) étant formé sur une surface du corps de boîte (2) entourant l'ouverture d'installation (21) correspondante.

11. Boîtier de montage selon la revendication 10, **caractérisé en ce que** chaque second élément de fixation (9) est adapté pour être activé en retirant le premier élément de fixation (4) correspondant.

12. Boîtier de montage selon la revendication 1, **caractérisé en ce que** les moyens de fixation comprennent une pluralité d'éléments de fixation (6) pour chaque ouverture d'installation (21), chaque élément de fixation (6) s'étendant radialement vers l'intérieur à partir d'une surface du corps de boîte (2) entourant l'ouverture d'installation (21) correspondante et obliquement vers l'intérieur dans la direction axiale, dans laquelle la surface d'accès (62) est une surface externe de l'élément de fixation (6) faisant face à l'extérieur du corps de boîte (2), et une surface de butée (64) comprend une surface d'extrémité distale de l'élément de fixation (6).

13. Boîtier de montage selon l'une quelconque des revendications précédentes, **caractérisé en ce que** le corps de boîte (2) a une partie de base dont la section transversale est sensiblement un carré, la partie de base comprenant la au moins une ouverture d'installation (21), les moyens de fixation étant positionnés à l'intérieur du carré.

14. Boîtier de montage selon l'une quelconque des revendications précédentes, **caractérisé en ce que** le boîtier de montage est réalisé à partir d'un seul matériau.

15. Boîtier de montage selon l'une quelconque des revendications précédentes, **caractérisé en ce que** le corps de boîte (2) est réalisé à partir d'une matière plastique.
